# EUROPÄISCHE PATENTSCHRIFT

(11) **EP 2 272 643 B1**
(45) Veröffentlichungstag und Bekanntmachung des Hinweises auf die Patenterteilung: **12.09.2012**
(21) Anmeldenummer: 10167117.0
(22) Anmeldetag: 24.06.2010
(51) Int. Cl.: B27C 3/04, B23B 39/16, B23Q 1/48, B23Q 1/70, B23Q 5/32

(54) **Spindelaggregat**
Spindle unit
Agrégat de broche

(30) Priorität: 09.07.2009 DE 102009032695
(43) Veröffentlichungstag der Anmeldung: 12.01.2011
(73) Patentinhaber: Wittenstein AG, 97999 Igersheim (DE)
(72) Erfinder: Meier, Volker, 32676, Lügde (DE)
(74) Vertreter: von den Steinen, Axel

(56) Entgegenhaltungen:
- DE-A1- 10 120 883
- DE-A1- 19 648 251
- DE-A1- 19 822 372
- DE-A1-102007 016 694
- DE-A1-102007 038 462
- DE-U1- 9 104 978
- DE-U1- 20 115 251
- US-A- 4 358 228

## Beschreibung

Die Erfindung betrifft ein Spindelaggregat zur Bildung eines Mehrfachspindel-Bearbeitungskopfes für eine Werkzeugmaschine nach dem Oberbegriff des Anspruchs 1.

Aus dem Stand der Technik sind Mehrfachspindel-Bearbeitungsköpfe bekannt, die beispielsweise am Verfahrantrieb einer Werkzeugmaschine befestigt werden können. Auf diese Weise kann der Bearbeitungskopf beispielsweise dreiachsig verfahren und positioniert werden. An den verschiedenen Werkzeugspindeln des Bearbeitungskopfes können jeweils Werkzeuge, beispielsweise Bohrer, Fräser oder Sägeblätter, vorgesehen und motorisch angetrieben werden. Insbesondere in der Möbelindustrie werden entsprechende Mehrfachspindel-Bearbeitungsköpfe eingesetzt, um rationell die Bearbeitung von plattenförmigen Bauteilen, beispielsweise Möbelfronten, Korpusteilen, Panelen oder Isolierplatten, durchführen zu können.

Um den Mehrfachspindel-Bearbeitungskopf flexibel auf verschiedene Bearbeitungsaufgaben anpassen zu können, sind Spindelaggregate bekannt, bei denen die Antriebsspindel nicht nur rotatorisch angetrieben werden kann, sondern auch eine axiale Verstellung möglich ist. Diese axiale Verstellung dient dabei der Verstellung des an der Antriebsspindel vorgesehenen Werkzeugs zwischen einer Ruhestellung und einer Nutzstellung. In der Ruhestellung kommt das Werkzeug dann nicht am Werkstück zum Eingriff und behindert aber zugleich nicht den Eingriff der anderen Werkzeuge des Bearbeitungskopfes. Wird die Antriebsspindel dann in ihre Nutzstellung verfahren, so kann das Werkzeug am Werkstück in Eingriff gebracht werden und eine entsprechende Bearbeitungsaufgabe erfüllen. Von großer Bedeutung ist diese Verstellung der einzelnen Antriebsspindeln zwischen einer Ruhestellung und einer Nutzstellung an Mehrfachspindel-Bearbeitungsköpfen, die für Bohraufgaben vorgesehen sind. Bei diesen für Bohraufgaben vorgesehenen Bearbeitungsköpfen sind eine Vielzahl von Bohrern an den verschiedenen Antriebsspindeln befestigt, um durch Vorschub des Bearbeitungskopfes in einem Arbeitsgang eine Vielzahl von Bohrlöchern entsprechend einem vorgegebenen Bohrbild anbringen zu können. Um das Bohrbild flexibel verändern zu können, werden die einzelnen Antriebsspindeln wahlweise in ihre Ruhestellung oder in ihre Nutzstellung verfahren, wobei sich je nach Positionierung der einzelnen Antriebsspindeln in der Ruhestellung bzw. in der Nutzstellung jeweils unterschiedliche Bohrbilder ergeben.

Bei den üblichen Spindelaggregaten zur Bildung von Mehrfachspindel-Bearbeitungsköpfen ist für den rotatorischen Antrieb der Antriebsspindel ein Elektromotor vorgesehen. Für die axiale Verstellung der Antriebsspindel wird dagegen üblicherweise ein Pneumatikantrieb vorgesehen, mit dem der elektrisch angetriebene Antriebsmotor axial im Spindelaggregat verfahren werden kann. Ein solches Spindelaggregat ist beispielsweise in der DE 10 2007 038 462 beschrieben.

Nachteilig an diesen Spindelaggregaten mit einem elektromotorischen Rotationsantrieb und einem pneumatischen Axialantrieb ist es, dass der Mehrfachspindel-Bearbeitungskopf zwei parallele Energieversorgungssysteme, nämlich ein elektrisches und ein pneumatisches, aufweisen muss. Auch im Spindelaggregat selber müssen zwei Antriebseinheiten, nämlich eine pneumatische und eine elektromotorische, vorgesehen werden, so dass insgesamt die Herstellungskosten für derartige Spindelaggregate mit pneumatischem Axialantrieb und elektromotorischem Rotationsantrieb relativ hoch sind. Weiterhin nachteilig sind die hohen Betriebskosten bei Einsatz solcher Spindelaggregate, da die für den Einsatz der Spindelaggregate notwendige Druckluft einen hohen Installations- und Unterhaltsaufwand verursacht.

Alternative Spindelaggregate, wie beispielsweise in der DE 91 04 978 U1 beschrieben, sind zwar dazu eingerichtet, eine Axialstellvorrichtung und einen Rotationsantrieb einer Bohrspindel über separate rotatorische Antriebe anzutreiben, wobei jedoch dadurch ein sehr aufwendiger und räumlich ausgedehnter Aufbau des Spindelaggregats verursacht wird. Insbesondere durch die Übertragung der Energie von einem der Antriebe zu der die Bohrspindel führenden Hülse mittels eines Zahnriemens wird ein verschleiß- und wartungsanfälliger Aufbau des Spindelaggregats verursacht, was zu sehr hohen Betriebskosten führt. Zudem kann durch die Konstruktion mit einer rotatorisch angetriebenen aber axial fest im Spindelaggregat stehenden Hülse die Antriebskraft nur in begrenztem Maße auf die Bohrspindel übertragen werden. Begrenzende Faktoren sind dabei die Nut-Feder-Verbindung zwischen Hülse und Bohrspindel und der Zahnriemenantrieb der Hülse.

Ausgehend von diesem Stand der Technik ist es deshalb Aufgabe der vorliegenden Erfindung, ein neues Spindelaggregat zur Bildung von Mehrfachspindel-Bearbeitungsköpfen vorzuschlagen, mit dem die Herstellungs- und Betriebskosten gesenkt werden können.

Diese Aufgabe wird durch ein Spindelaggregat nach der Lehre des Anspruchs 1 gelöst.

Vorteilhafte Ausführungsformen der Erfindung sind Gegenstand der Unteransprüche.

Das erfindungsgemäße Spindelaggregat beruht auf der Grundüberlegung, dass sich aus der konstruktiven Ausbildung des Spindelaggregats und insbesondere der Anordnung des Antriebsmotors im Spindelaggregat ein besonders einfacher und kompakter Aufbau des Spindelaggregats ergibt, wenn der Antriebsmotor selbst axial verschiebbar im Spindelaggregat gelagert ist. Dadurch wird vermieden, dass eine Relativbewegung zwischen Antriebsmotor und Antriebsspindel bei der axialen Verstellung der Antriebsspindel notwendig ist, da bei der axialen Verstellung der Antriebsspindel zugleich auch der Antriebsmotor axial im Spindelaggregat verschoben werden kann.

Weiter ist vorgesehen, dass nicht nur der Rotationsantrieb der Antriebsspindel mit dem elektrischen Antriebsmotor angetrieben wird, sondern auch die Axialverstellvorrichtung mit genau dem gleichen Antriebsmotor motorisch angetrieben wird. Durch diese Doppelnutzung des Antriebsmotors sowohl für die Axialverstellung als auch für den Rotationsantrieb können die Kosten für den Einbau eines separaten Antriebsmotors für die Axialverstellvorrichtung eingespart werden, da der gleiche Antriebsmotor sowohl für die rotatorische Antriebsbewegung als auch für die axiale Stellbewegung sorgt. Auch die Kosten für zwei parallele Energieversorgungssysteme können entfallen, da für die Energieversorgung des Rotationsantriebs, der zugleich auch zur axialen Verstellung eingesetzt wird, selbstverständlich nur ein Energieversorgungssystem notwendig ist. Üblicherweise kann also auf diese Weise die Pneumatikversorgung an den einzelnen Spindelaggregaten entfallen.

Da erfindungsgemäß der Antriebsmotor des Spindelaggregats kombiniert sowohl für den rotatorischen Antrieb als auch für die axiale Verstellung genutzt wird, ist es besonders vorteilhaft, wenn im Spindelaggregat eine Umschalteinrichtung zur Umschaltung der Betriebsart des Antriebsmotors vorgesehen ist. Gemäß der ersten Betriebsart des Antriebsmotors wird dann die Antriebsspindel vom Antriebsmotor rotatorisch angetrieben, wohingegen in der zweiten Betriebsart die Antriebsspindel vom Antriebsmotor axial verstellt wird. Ob der Antriebsmotor die Antriebsspindel in dieser zweiten Betriebsart zugleich auch rotatorisch antreibt, ist grundsätzlich beliebig.

Gemäß einer bevorzugten Ausführungsform ist die Umschalteinrichtung in der Art einer schaltbaren Kupplung ausgebildet, wobei durch Umschaltung der Kupplung die Stellbewegung des Antriebsmotors wahlweise auf die Axialstellvorrichtung oder den rotatorischen Antrieb der Antriebsspindel übertragbar ist. Dies bedeutet mit anderen Worten, dass durch Umschalten der Kupplung wahlweise eine Axialverstellung der Antriebsspindel oder ein rotatorischer Antrieb der Antriebsspindel erfolgt.

Alternativ zur vollständigen Entkopplung der Axialverstellung der Antriebsspindel einerseits und dem rotatorischen Antrieb der Antriebsspindel anderseits, beispielsweise durch Verwendung einer schaltbaren Kupplung, ist es auch denkbar, wenn die Antriebsspindel in der zweiten Betriebsart vom Antriebsmotor rotatorisch angetrieben und zugleich axial verstellt wird. In der Konsequenz bedeutet dies, dass zur Umschaltung zwischen den beiden Betriebsarten der Axialverstellantrieb ein- bzw. ausgekoppelt wird, wohingegen in beiden Betriebsarten durchgängig ein Rotationsantrieb der Antriebsspindel durch den Antriebsmotor vorgesehen ist.

Die konstruktive Umsetzung eines solchen einfachen Konzepts zum Ein- bzw. Auskoppeln des Axialverstellantriebs an dem vorhandenen Antriebsstrang zum rotatorischen Antrieb der Antriebsspindel durch den Antriebsmotor kann durch eine drehbar am Spindelaggregat gelagerte Spindelmutter, eine umschaltbare Arretiereinrichtung zur Arretierung der Spindelmutter und eine mit der Spindelmutter über ein Spindelgewinde in Eingriff stehende Gewindespindel realisiert werden. Die Gewindespindel ist dabei drehfest mit der Antriebsspindel verbunden, so dass die rotatorische Antriebsbewegung des Antriebsmotors jeweils auf die Gewindespindel übertragen wird. Durch die Umschaltung der Arretiereinrichtung kann dann die Spindelmutter wahlweise festgehalten bzw. freigegeben werden. Wird die Spindelmutter festgehalten, so entspricht dies der zweiten Betriebsart, da die rotatorisch angetriebene Gewindespindel in der feststehenden Spindelmutter aufgrund der Gewindesteigung axial nach oben bzw. nach unten versetzt wird. Die Richtung der Stellbewegung wird dabei durch die Drehrichtung der Gewindespindel und die Gewindesteigung vorgegeben. Wird dagegen die Spindelmutter freigegeben, so kann sich die Spindelmutter zusammen mit der Gewindespindel drehen und eine Relativbewegung zwischen Gewindespindel und Spindelmutter ist aufgrund der fehlenden Abstützung der Gewindespindel ausgeschlossen. Im Ergebnis kann also durch Umschalten der Arretiereinrichtung wahlweise der Axialverstellantrieb, der durch die Gewindespindel im Zusammenwirken mit der Spindelmutter realisiert wird, am Rotationsantrieb ein- bzw. ausgekoppelt werden. Für die konstruktive Ausbildung der umschaltbaren Arretiereinrichtung zur Arretierung der Spindelmutter gibt es verschiedenste Möglichkeiten. Gemäß einer bevorzugten Ausführungsform ist als Arretiereinrichtung zumindest eine Klaue im Spindelaggregat vorgesehen, die zwischen einer Arretierstellung und einer Freigabestellung verstellt werden kann. In der Arretierstellung greift die Klaue in eine Ausnehmung der Spindelmutter ein und arretiert diese auf diese Weise verdrehsicher im Spindelaggregat. Wird die Klaue dann in die Freigabestellung versetzt, so kommt sie außer Eingriff der Ausnehmung an der Spindelmutter, so dass die Spindelmutter sich im Spindelaggregat frei drehen kann.

In der Praxis treten an der Lagerung zur drehbaren Lagerung der Spindelmutter selbstverständlich gewisse Reibkräfte auf. Diese Reibkräfte verursachen ein gewisses Drehmoment, das auf die Spindelmutter wirkt. Würde dieses Drehmoment größer als die zwischen der Gewindespindel und der Spindelmutter übertragenen Drehmomente, so würde dies bedeuten, dass sich die Spindelmutter nicht mehr zusammen mit der Gewindespindel dreht, obwohl die Arretiereinrichtung freigegeben ist. In diesem Falle könnte dann der Axialverstellantrieb nicht mehr ausgekoppelt werden, da die Spindelmutter nicht mehr frei mit der Gewindespindel mitdrehen kann. Um dies zu verhindern kann gemäß einer ersten Ausführungsvariante zumindest eine Reibfläche vorgesehen sein, die in der Nutzstellung und/oder in der Ruhestellung der Gewindespindel reibschlüssig an einer Anlagefläche der Spindelmutter zum Eingriff kommt. Durch diese zusätzliche Reibfläche, die nur in der Ruhestellung bzw. nur in der Nutzstellung der Antriebsspindel reibschlüssig an der Anlagefläche der Spindelmutter zum Eingriff kommt, wird eine zusätzliche Reibkraft in der Nutzstellung bzw. Ruhestellung erzeugt, die zwischen Gewindespindel und Spindelmutter wirkt. Durch diese erhöhte Reibkraft zwischen Gewindespindel und Spindelmutter ist dann gewährleistet, dass jedenfalls in der Nutzstellung bzw. in der Ruhestellung der Antriebsspindel ohne weiteres zwischen den Betriebsarten der Umschalteinrichtung umgeschaltet werden kann, da die zwischen Gewindespindel und Spindelmutter wirkende Reibkraft in jedem Fall größer ist als die auf die Spindelmutter wirkende Reibkraft in der Drehlagerung.

Alternativ zur Verwendung einer zusätzlichen Reibfläche zur Gewährleitung des Einkoppelns bzw. Auskoppelns des Axialverstellantriebs an der sich drehenden Gewindespindel kann auch eine Spindelmutter mit selbsthemmender Gewindesteigung verwendet werden. Die Gewindesteigung der Gewindespindel ist also dabei so groß, dass die im Gewindegang auftretenden Reibkräfte eine Relativbewegung zwischen Gewindespindel und Spindelmutter nur ermöglichen, wenn die Spindelmutter durch die Arretiereinrichtung drehfest arretiert ist. Wird die Spindelmutter dagegen freigegeben, so muss die Spindelmutter aufgrund der im Gewindegang wirkenden Reibkräfte immer synchron mit der Gewindespindel rotieren.

Um das notwendige Drehmoment auf die Antriebsspindel übertragen zu können, kann eine Verdrehsicherung zwischen Antriebsmotor und Spindelaggregat eingebaut werden, so dass das auf die Antriebsspindel zu übertragende Drehmoment des Antriebsmotors mittels einer Drehmomentstütze auf das Spindelaggregat übertragen werden kann.

Die Verdrehsicherung zwischen Antriebsmotor und Spindelaggregat kann durch verschiedenste Drehmomentübertragungen, beispielsweise durch formschlüssig wirkende Polygonquerschnitte, realisiert werden. Konstruktiv kann die Verdrehsicherung zwischen Antriebsmotor und Spindelaggregat besonders einfach dadurch realisiert werden, dass im Modulgehäuse des Spindelaggregats eine Schlitzung vorgesehen ist, durch die sich die am Antriebsmotor befestigte Drehmomentstütze erstreckt. Bei der axialen Verstellung des Antriebsmotors wird die Drehmomentstütze also in der Schlitzung axial versetzt, wohingegen ein Verdrehen des Antriebsmotors relativ zum Modulgehäuse ausgeschlossen ist.

Um die Herstellung der Gewindespindel einerseits und der Antriebsspindel andererseits aus Standardelementen zu ermöglichen, ist es besonders vorteilhaft, wenn Gewindespindel und Antriebsspindel durch ein drehsteifes Kupplungselement miteinander verbunden werden. Diese Art des Aufbaus ist auch im Hinblick auf die Montage des Spindelaggregats vorteilhaft.

Um die Übertragung von Drehmomentspitzen zwischen Antriebsspindel und Gewindespindel auszuschließen, sollte im Kupplungselement zwischen Gewindespindel und Antriebsspindel ein Dämpfungselement realisiert sein.

Ein besonders schlanker Aufbau des Spindelaggregats, der im Hinblick auf eine kompakte Bauweise des Mehrfachspindel-Bearbeitungskopfes wünschenswert ist, ergibt sich, wenn die Mittelachse des Antriebsmotors, die Mittelachse der Antriebsspindel und die Mittelachse der Gewindespindel koaxial verlaufen und eine Aggregatsmittelachse definieren.

In welcher Weise das Spindelaggregat angetrieben wird, ist grundsätzlich beliebig. Bevorzugt wird dabei ein elektrisch antreibbarer, regelbarer Servomotor verwendet. Dieser Servomotor sollte dabei zumindest einen Sensor, insbesondere einen Lagesensor, umfassen, um einen Regelkreis aufbauen zu können.

Um die Mehrfachspindel-Bearbeitungsköpfe aus den erfindungsgemäßen Spindelaggregaten in unterschiedlichsten Formen und Gestaltungen aufbauen zu können, ist es bevorzugt, wenn das Spindelaggregat als ein Aggregatmodul ausgebildet ist und ein Modulgehäuse umfasst, in dem die Antriebsspindel frei drehbar und axial verschiebbar gelagert ist. Diese Modulgehäuse können dann zusammen mit den Modulgehäusen weiterer Spindelaggregate am Bearbeitungskopf befestigt werden. Die Modulgehäuse sollten dabei im Querschnitt Abmessungen aufweisen, die einem üblichen Raster, beispielsweise von 32 mm, entsprechen, um mehrere Aggregatmodul in kompakter Bauweise am Mehrfachspindel-Bearbeitungskopf anbringen zu können.

Besonderes vorteilhaft ist es, wenn im Modulgehäuse eines Aggregatmoduls mehrere, insbesondere zwei, Spindelaggregate mit jeweils einem

Antriebsmotor und einer zugeordneten Antriebsspindel vorgesehen sind. Dies bedeutet, dass das Aggregatmodul lediglich ein Modulgehäuse aufweist, in dem nebeneinander mehrere Aggregatmodule untergebracht sind.

Eine Ausführungsform der Erfindung ist in den Zeichnungen schematisch dargestellt und wird nachfolgend beispielhaft erläutert.

Es zeigen:
- Fig. 1: einen aus mehreren Spindelaggregaten zusammengesetzten Mehrfachspindel-Bearbeitungskopf in perspektivischer Ansicht;
- Fig. 2: einen Teil der Spindelaggregate des Bearbeitungskopfes gemäß Fig. 1 im Querschnitt;
- Fig. 3: eine zweite Ausführungsform eines Spindelaggregats in der ausgefahrenen Nutzstellung und der zurückgezogenen Ruhestel- lung im Querschnitt.

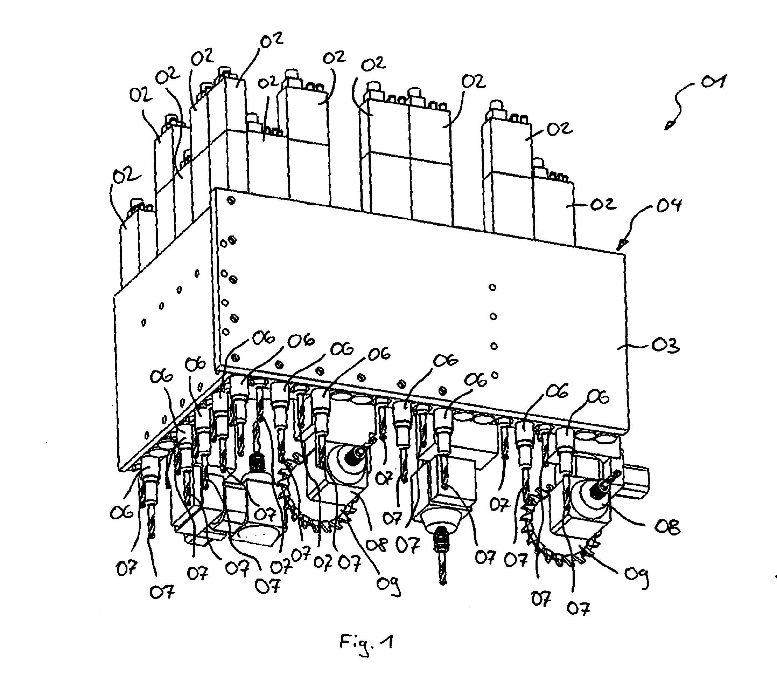

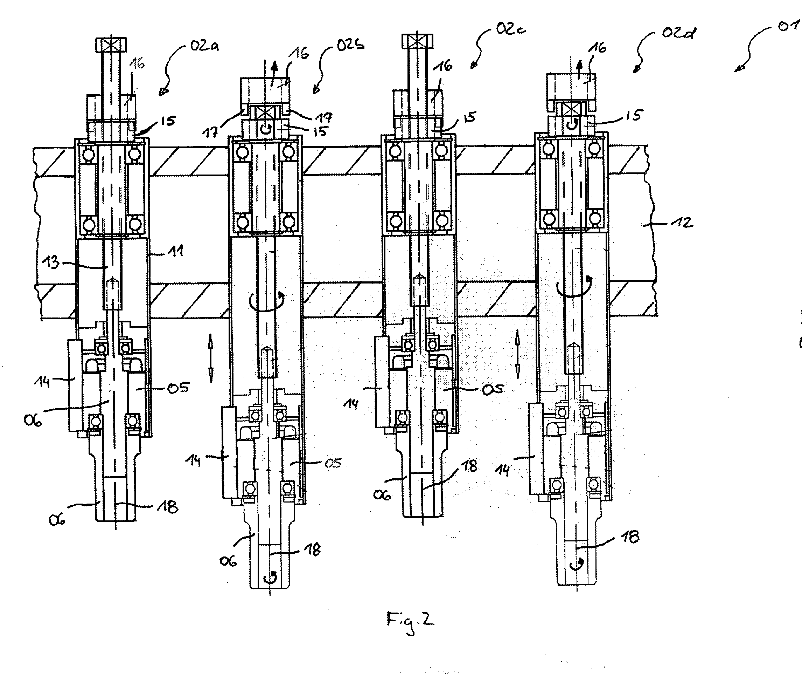

Fig. 1 zeigt einen Mehrfachspindel-Bearbeitungskopf 01 mit mehreren Spindelaggregaten 02, die in das Gehäuse 03 des Mehrfachspindel-Bearbeitungskopfes 01 eingebaut sind. Seitlich ist am Gehäuse 03 eine nicht dargestellte Steuerungseinheit 04 befestigt, die die Antriebsmotoren 05 (siehe Fig. 2) in den Spindelaggregaten 02 steuert. Man erkennt in Fig. 1 mehrere Antriebsspindeln 06 von Vertikalbohrern 07, die durch Positionierung des Gehäuses 03 über einem Werkstück lagerichtig positioniert und dort ein Bohrbild anbringen können. An den Antriebsspindeln weiterer Spindelaggregate 02 des Mehrfachspindel-Bearbeitungskopfes 01 sind Horizontalbohrmodule 08 bzw. Fräsmodule 09 vorgesehen. Um die Vertikalbohrer 07, die Horizontalbohrmodule 08 bzw. die Fräsmodule 09 wahlweise mit einem Werkstück in Eingriff bringen zu können, können die Antriebsspindeln 06 in Richtung des Bewegungspfeils 10 relativ zum Gehäuse 03 aus- bzw. eingefahren werden.
Fig. 2 zeigt einen Schnitt durch den Mehrfachspindel-Bearbeitungskopf 01, wobei nur die für die Erfindung wesentlichen Bauteile dargestellt sind. Die vier nebeneinander angeordneten Spindelaggregate 02 sind mit ihren Modulgehäusen starr mit einem Träger 12 im Mehrfachspindel-Bearbeitungskopf 01 festgelegt und können somit zusammen mit dem Träger 12 des Mehrfachspindel-Bearbeitungskopfes 01 in einer festen Relativzuordnung zueinander positioniert werden. Zum rotatorischen Antrieb der Antriebsspindel 06 dient jeweils ein Elektromotor 05, der über ein in Fig. 2 nicht dargestelltes Kabel an die Steuerungseinheit 04 angeschlossen ist. Das hintere Ende der Antriebsspindel 06 ist in das vordere Ende einer Gewindespindel 13 eingeschraubt. Die Gewindespindel 13 ist also drehfest mit der Antriebsspindel 06 verbunden, so dass die rotatorische Antriebsbewegung des Antriebsmotors 05 jeweils zugleich auf die Antriebsspindel 06 und die Gewindespindel 13 übertragen wird. Zur Drehmomentabstützung des Antriebsmotors 05 gegenüber dem Modulgehäuse 11 dient eine Drehmomentstütze 14, die das Modulgehäuse 11 in einer Schlitzung durchgreift.

Wie in Fig. 2 dargestellt, können die Antriebsspindeln 06 der Spindelaggregate 02 wahlweise zwischen einer ausgefahrenen Nutzstellung und einer zurückgezogenen Ruhestellung verstellt werden. In Fig. 2 nehmen die Spindelaggregate 02a und 02c die eingefahrene Ruhestellung und die Spindelaggregate 02b und 02d die ausgefahrene Nutzstellung ein.

Um die axiale Stellbewegung zwischen der ausgefahrenen Nutzstellung und der eingefahrenen Ruhestellung realisieren zu können, dient eine Umschalteinrichtung, die aus der Gewindespindel 13, einer drehbar am Modulgehäuse 11 gelagerten Spindelmutter 15 und einer umschaltbaren Arretiereinrichtung 16 gebildet ist. Die Gewindespindel 13 steht mit der Spindelmutter 15 in einem selbsthemmenden Gewindegang in Eingriff, wobei die Spindelmutter 15 mittels der Arretiereinrichtung 16 wahlweise drehfest arretiert oder frei rotierend freigegeben werden kann. Ist die Arretiereinrichtung 16 mit ihren Fixierklauen 17, wie an den Spindelaggregaten 02a und 02c, nach unten gefahren, so greifen die Fixierklauen in Ausnehmungen an den Spindelmuttern 15 und verhindern auf diese Weise durch Formschluss eine Rotationsbewegung der Spindelmuttern 15. Wird nun bei arretierter Spindelmutter 15 die Gewindespindel 13 durch Rotation des Antriebsmotors 05 in Rotation versetzt, so folgt daraus eine axial in Längsrichtung der Mittelachse 18 gerichtete axiale Stellbewegung, mit der die Antriebsspindel 06 zusammen mit dem Antriebsmotor 05 und der Gewindespindel 13 relativ zum Modulgehäuse axial ein- und ausgefahren werden kann.

Hat die Antriebsspindel 06, wie an den Spindelaggregaten 02b und 02d, ihre axial ausgefahrene Nutzstellung erreicht, so kann die Arretiereinrichtung 16 durch Herausfahren der Klauen 17 gelöst und dadurch eine frei drehbare Lagerung der Spindelmutter 15 erreicht werden. Da der Gewindegang zwischen der Spindelmutter 15 und der Gewindespindel 13 eine selbsthemmende Steigung aufweist, wird nun bei Rotation des Antriebsmotors 05 und der damit verbundenen Rotationsbewegung der Antriebsspindel 06 bzw. der Gewindespindel 13 eine Rotationsbewegung der Spindelmutter 15 bewirkt. Eine axiale Verstellbewegung der Antriebsspindel 06 ist dagegen ausgeschlossen, da die Spindelmutter 15 nicht mehr fixiert ist und sich somit zusammen mit der Gewindespindel 13 mit der gleichen Rotationsfrequenz wie der Antriebsmotor 05 dreht.

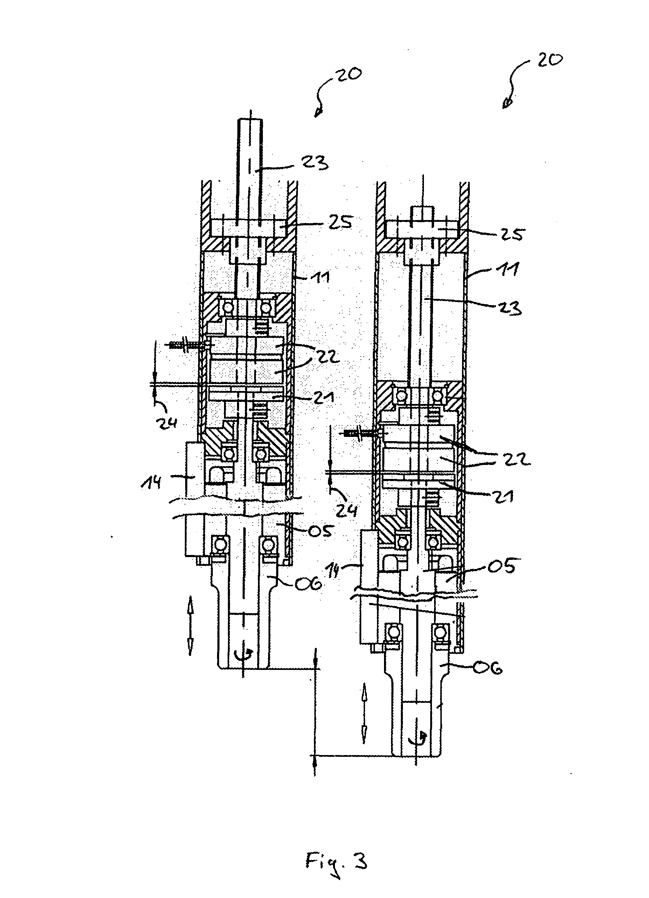

Fig. 3 zeigt eine zweite Ausführungsform 20 eines Spindelaggregats in der ausgefahrenen Nutzstellung und der zurückgezogenen Ruhestellung im Querschnitt.

Zum rotatorischen Antrieb der Antriebsspindel 06 dient wiederum ein Elektromotor 05, der über ein Kabel an eine in Fig. 3 nicht dargestellte Steuerungseinheit 04 angeschlossen ist. Das hintere Ende der Antriebsspindel 06 kann mittels einer Reibscheibe 21 und einer schaltbaren Magnetkupplung 22 an das vordere Ende einer Gewindespindel 23 angekoppelt werden. Ist die schaltbare Magnetkupplung 22 eingekuppelt und der Luftspalt 24 zwischen Reibscheibe 21 und Magnetkupplung 22 geschlossen, so ist dann die Gewindespindel 23 drehfest mit der Antriebsspindel 06 verbunden, so dass die rotatorische Antriebsbewegung des Antriebsmotors 05 jeweils zugleich auf die Antriebsspindel 06 und die Gewindespindel 23 übertragen wird. Zur Drehmomentabstützung des Antriebsmotors 05 gegenüber dem Modulgehäuse 11 dient eine Drehmomentstütze 14, die das Modulgehäuse 11 in einer Schlitzung durchgreift.

Wie in Fig. 3 dargestellt, kann die Antriebsspindel 06 des Spindelaggregats 20 wahlweise zwischen einer ausgefahrenen Nutzstellung und einer zurückgezogenen Ruhestellung verstellt werden. Um die axiale Stellbewegung zwischen der ausgefahrenen Nutzstellung und der eingefahrenen Ruhestellung realisieren zu können, wird die Magnetkupplung 22 ein- bzw. ausgekuppelt, so dass die Antriebsbewegung des Antriebsmotors 05 wahlweise entweder nur auf die Antriebsspindel 06 (Magnetkupplung 22 ausgekuppelt) oder zugleich auf die Antriebsspindel 06 und die Gewindespindel 23 (Magnetkupplung 22 eingekuppelt) übertragen wird. Die Gewindespindel 23 steht mit einer Spindelmutter 25 in einem selbsthemmenden Gewindegang in Eingriff, wobei die Spindelmutter 25 drehfest im Gehäuse 11 arretiert ist, um die Gewindespindel 23 abzustützen.

## Patentansprüche

1. Spindelaggregat (02, 20) zur Bildung eines Mehrfachspindel-Bearbeitungskopfes (01) für eine Werkzeugmaschine, wobei das Spindelaggregat (02, 20) zumindest eine Antriebsspindel (06) umfasst, und wobei die Antriebsspindel (06) frei drehbar und axial verschiebbar im Spindelaggregat (02, 20) gelagert ist, und wobei das Spindelaggregat (02, 20) zumindest einen Antriebsmotor (05) umfasst, mit dem die Antriebsspindel (06) rotatorisch angetrieben wird, und wobei das Spindelaggregat (02, 20) zumindest eine Axialstellvorrichtung (13, 15, 16; 22, 23, 25) umfasst, mit der die Antriebsspindel (06) zwischen einer Ruhestellung und einer Nutzstellung axial verstellbar ist, wobei die Axialstellvorrichtung (13, 15, 16; 22, 23, 25) mit dem zum rotatorischen Antrieb der Antriebsspindel (06) vorgesehenen Antriebsmotor (05) motorisch angetrieben wird,
**dadurch gekennzeichnet,**
**dass** der Antriebsmotor (05) axial verschiebbar im Spindelaggregat (02) gelagert ist und zusammen mit der Antriebsspindel (06) zwischen der Ruhestellung und der Nutzstellung am Mehrfachspindel-Bearbeitungskopf (01) axial verstellbar ist.

2. Spindelaggregat nach Anspruch 1,
**dadurch gekennzeichnet,**
**dass** an der Antriebsspindel (06) ein Werkzeug (07) oder Werkzeugträger (08, 09) anbringbar ist.

3. Spindelaggregat nach Anspruch 1 oder 2,
**dadurch gekennzeichnet,**
**dass** das Spindelaggregat (02, 20) eine Umschalteinrichtung (16, 22) umfasst, mit der zwischen einer ersten Betriebsart, in der die Antriebsspindel (06) vom Antriebsmotor (05) rotatorisch angetrieben werden kann, und einer zweiten Betriebsart, in der die Antriebsspindel (06) vom Antriebsmotor (05) axial verstellt werden kann, umgeschaltet werden kann.

4. Spindelaggregat nach Anspruch 3,
**dadurch gekennzeichnet,**
**dass** die Umschalteinrichtung (16, 22) in der Art einer schaltbaren Kupplung (22), insbesondere einer Magnetkupplung, ausgebildet ist, wobei durch Umschaltung der Kupplung (22) die Stellbewegung des Antriebsmotors (05) wahlweise auf die Axialstellvorrichtung (13, 15, 16) oder den rotatorischen Antrieb der Antriebsspindel (06) übertragbar ist.

5. Spindelaggregat nach einem der Ansprüche 1 bis 4,
**dadurch gekennzeichnet,**
**dass** die Antriebsspindel (06) in der ersten Betriebsart vom Antriebsmotor (05) ausschließlich rotatorisch angetrieben wird und die Antriebsspindel (06) in der zweiten Betriebsart vom Antriebsmotor (05) kombiniert rotatorisch angetrieben und axial verstellt wird.

6. Spindelaggregat nach einem der Ansprüche 1 bis 5,
**dadurch gekennzeichnet,**
**dass** die Axialstellvorrichtung (13, 15, 16) eine drehbar im Spindelaggregat (02) gelagerte Spindelmutter (15), eine umschaltbare Arretiereinrichtung (16), mit der die Spindelmutter (15) verdrehsicher arretiert und drehbar freigegeben werden kann, und eine mit der Antriebsspindel (06) verbundene Gewindespindel (13), die mit der Spindelmutter (15) in Eingriff steht, umfasst.

7. Spindelaggregat nach Anspruch 6,
**dadurch gekennzeichnet,**
**dass** die umschaltbare Arretiereinrichtung (16) zumindest eine Klaue (17) umfasst, die motorisch zwischen einer Arretierstellung und einer Freigabestellung verstellt werden kann, wobei die Klaue (17) in der Arretierstellung in eine Ausnehmung der Spindelmutter (15) eingreift und die Spindelmutter (15) verdrehsicher arretiert, und wobei die Klaue (17) in der Freigabestellung außer Eingriff der Ausnehmung an der Spindelmutter (15) kommt und sich die Spindelmutter (15) frei drehen kann.

8. Spindelaggregat nach Anspruch 6 oder 7,
**dadurch gekennzeichnet,**
**dass** die Gewindespindel (13) zumindest eine Reibfläche aufweist, die in der Nutzstellung und/oder in der Ruhestellung der Antriebsspindel (06) reibschlüssig an einer Anlagefläche der Spindelmutter (15) zum Eingriff kommt, um ein Drehmoment reibschlüssig zwischen der Spindelmutter (15) und der Gewindespindel (13) übertragen zu können.

9. Spindelaggregat nach einem der Ansprüche 6 bis 8,
**dadurch gekennzeichnet,**
**dass** die Gewindespindel (13) und die Spindelmutter (15) eine selbsthemmende Gewindesteigung aufweisen, um ein Drehmoment reibschlüssig zwischen der Spindelmutter (15) und der Gewindespindel (13) übertragen zu können.

10. Spindelaggregat nach einem der Ansprüche 1 bis 9,
**dadurch gekennzeichnet,**
**dass** der Antriebsmotor (05) zur Verdrehsicherung drehfest am Spindelaggregat (02) abgestützt ist.

11. Spindelaggregat nach Anspruch 10,
**dadurch gekennzeichnet,**
**dass** zur drehfesten und axial verschiebbaren Lagerung des Antriebsmotors (05) zumindest eine parallel zur Längsachse der Antriebsspindel (06) verlaufende Schlitzung im Modulgehäuse (11) vorgesehen ist, durch die sich eine am Antriebsmotor (05) befestigte Drehmomentstütze (14) erstreckt.

12. Spindelaggregat nach einem der Ansprüche 6 bis 9,
**dadurch gekennzeichnet,**
**dass** die Gewindespindel (13) und die Antriebsspindel (06) durch ein drehsteifes Kupplungselement miteinander verbunden sind.

13. Spindelaggregat nach Anspruch 12,
**dadurch gekennzeichnet,**
**dass** das drehsteife Kupplungselement ein Dämpfungselement zur Dämpfung von Drehmomentspitzen umfasst.

14. Spindelaggregat nach einem der Ansprüche 6 bis 13,
**dadurch gekennzeichnet,**
**dass** die Mittelachse des Antriebsmotors (05), die Mittelachse der Antriebsspindel (06) und die Mittelachse der Gewindespindel (13) koaxial verlaufen und eine Aggregatsmittelachse (18) definieren.

15. Spindelaggregat nach einem der Ansprüche 1 bis 14,
**dadurch gekennzeichnet,**
**dass** der Antriebsmotor (05) in der Art eines regelbaren Servomotors ausgebildet ist, wobei der Servomotor zumindest einen Sensor, insbesondere einen Lagesensor, aufweist.

16. Spindelaggregat nach einem der Ansprüche 1 bis 15,
**dadurch gekennzeichnet,**
**dass** das Spindelaggregat (02) als Aggregatmodul ausgebildet ist und ein Modulgehäuse (11) umfasst, in dem die Antriebsspindel (06) drehbar und axial verschiebbar gelagert ist, wobei das Modulgehäuse (11) zusammen mit den Modulgehäusen (11) weiterer Spindelaggregate (02a, 02b, 02c, 02d) am Bearbeitungskopf (01) befestigbar ist.

17. Spindelaggregat nach Anspruch 16,
**dadurch gekennzeichnet,**
**dass** im Modulgehäuse (11) eines Aggregatmoduls mehrere, insbesondere zwei, Spindelaggregate mit jeweils einem Antriebsmotor (05) und einer zugeordneten Antriebsspindel (06) vorgesehen sind.

## Claims

1. Spindle unit (02, 20) for forming a multispindle machining head (01) for a machine tool, wherein the spindle unit (02, 20) comprises at least one drive spindle (06), and wherein the drive spindle (06) is mounted in the spindle unit (02, 20) so as to be freely rotatable and axially displaceable, and wherein the spindle unit (02, 20) comprises at least one drive motor (05) by means of which the drive spindle (06) is rotationally driven, and wherein the spindle unit (02, 20) comprises at least one axial adjusting device (13, 15, 16; 22, 23, 25) by means of which the drive spindle (06) can be axially adjusted between a resting position and a use position, wherein the axial adjusting device (13, 15, 16; 22, 23, 25) is motor-driven by the drive motor (05) being provided for rotationally driving the drive spindle (06),
**characterized in that**
the drive motor (05) is mounted in the spindle unit (02) so as to be axially displaceable and together with the drive spindle (06) is axially adjustable between the resting position and the use position at the multispindle machining head (01).

2. Spindle unit according to Claim 1,
**characterized in that**
a tool (07) or a tool carrier (08, 09) can be attached to the drive spindle (06).

3. Spindle unit according to Claim 1 or 2,
**characterized in that**
the spindle unit (02, 20) comprises a switching device (16, 22) for switching between a first operating mode, in which the drive spindle (06) can be rotationally driven by the drive motor (05), and a second operating mode, in which the drive spindle (06) can be axially adjusted by the drive motor (05).

4. Spindle unit according to Claim 3,
**characterized in that**
the switching device (16, 22) is designed in the type of a switchable coupling (22), in particular a magnetic coupling, wherein switching of the coupling (22) allows transmission of the adjusting movement of the drive motor (05) optionally to the axial adjusting device (13, 15, 16) or to the rotational drive mechanism of the drive spindle (06).

5. Spindle unit according to any of Claims 1 to 4,
**characterized in that**
in the first operating mode the drive spindle (06) is driven by the drive motor (05) exclusively in a rotational manner and in the second operating mode the drive spindle (06) is driven by the drive motor in a rotational manner in combination with being axially adjusted.

6. Spindle unit according to any of Claims 1 to 5,
**characterized in that**
the axial adjusting device (13, 15, 16) comprises a spindle nut (15) being rotatably mounted in the spindle unit (02) and a switchable locking device (16) by means of which the spindle nut (15) can be locked in a torsion-proof manner and can be rotatably released, and comprises a threaded spindle (13) being connected to the drive spindle (06) and being in engagement with the spindle nut (15).

7. Spindle unit according to Claim 6,
**characterized in that**
the switchable locking device (16) comprises at least one claw (17) which can be adjusted in a motor-driven manner between a locking position and a release position, wherein in the locking position the claw (17) engages with a recess of the spindle nut (15) and locks the spindle nut (15) in a torsion-proof manner, and wherein in the release position the claw (17) becomes disengaged from the recess in the spindle nut (15) and the spindle nut (15) is allowed to rotate freely.

8. Spindle unit according to Claim 6 or 7,
**characterized in that**
the threaded spindle (13) features at least one frictional surface which in the use position and/or in the resting position of the drive spindle (06) comes into contact with an abutment surface of the spindle nut (15) in a frictionally engaging manner in order to enable transmission of a torque in a frictionally engaging manner between the spindle nut (15) and the threaded spindle (13).

9. Spindle unit according to any of Claims 6 to 8,
**characterized in that**
the threaded spindle (13) and the spindle nut (15) feature a self-inhibiting thread pitch in order to enable transmission of a torque in a frictionally engaging manner between the spindle nut (15) and the threaded spindle (13).

10. Spindle unit according to any of Claims 1 to 9,
**characterized in that**
the drive motor (05) is supported in a torsion-proof manner at the spindle unit (02) to ensure a torsion-proof connection.

11. Spindle unit according to Claim 10,
**characterized in that**
at least one slotting running in parallel to the longitudinal axis of the drive spindle (06) to ensure torsion-proof and axially displaceable mounting of the drive motor (05) is provided in the module housing (11), said slotting featuring a torque support (14) which extends therethrough and which is affixed to the drive motor (05).

12. Spindle unit according to any of Claims 6 to 9,
**characterized in that**
the threaded spindle (13) and the drive spindle (06) are connected to each other by means of a torsionally rigid coupling element.

13. Spindle unit according to Claim 12,
**characterized in that**
the torsionally rigid coupling element is a damping element for damping torque peaks.

14. Spindle unit according to any of Claims 6 to 13,
**characterized in that**
the centre axis of the drive motor (05), the centre axis of the drive spindle (06) and the centre axis of the threaded spindle (13) run coaxially and define a spindle unit centre axis (18).

15. Spindle unit according to any of Clams 1 to 14,
**characterized in that**
the drive motor (05) is designed in the type of a controllable servomotor, wherein the servomotor features at least one sensor, in particular a position sensor.

16. Spindle unit according to any of Claims 1 to 15,
**characterized in that**
the spindle unit (02) is designed as a modular unit and comprises a module housing (11), in which the drive spindle (06) is mounted so as to be rotatable and axially displaceable, wherein the module housing (11) together with the module housings (11) of further spindle units (02a, 02b, 02c, 02d) can be affixed to the machining head (01).

17. Spindle unit according to Claim 16,
**characterized in that**
in the module housing (11) of one modular unit provision is made for several, in particular two, spindle units each having a drive motor (05) and an associated drive spindle (06).

## Revendications

1. Unité de broche (02, 20) pour la formation d'une tête d'usinage multibroche (01) pour une machine-outil, l'unité de broche (02, 20) comprenant au moins une broche d'entraînement (06), et la broche d'entraînement (06) étant montée dans l'unité de broche (02, 20) de manière à pouvoir tourner librement et de manière à être axialement déplaçable, et l'unité de broche (02, 20) comprenant au moins un moteur d'entraînement (05) permettant l'entraînement en rotation de la broche d'entraînement (06), et l'unité de broche (02, 20) comprenant au moins un dispositif de réglage axial (13, 15, 16; 22, 23, 25) permettant le réglage axial de la broche d'entraînement (06) entre une position de repos et une position d'utilisation, le dispositif de réglage axial (13, 15, 16 ; 22, 23, 25) étant entraîné par moteur moyennant le moteur d'entraînement (05) étant prévu pour l'entraînement en rotation de la broche d'entraînement (06),
**caractérisée en ce que**
le moteur d'entraînement (05) est monté dans l'unité de broche (02) de manière à être axialement déplaçable et est axialement réglable conjointement avec la broche d'entraînement (06) entre la position de repos et la position d'utilisation à la tête d'usinage multibroche (01).

2. Unité de broche selon la revendication 1,
**caractérisée en ce qu'**
un outil (07) ou bien un porte-outil (08, 09) peut être fixé à la broche d'entraînement (06).

3. Unité de broche selon la revendication 1 ou 2,
**caractérisée en ce que**
l'unité de broche (02, 20) comprend un dispositif de commutation (16, 22) pour la commutation entre un premier mode de fonctionnement où la broche d'entraînement (06) peut être entraînée en rotation par le moteur d'entraînement (05), et un second mode de fonctionnement où la broche d'entraînement (06) peut être réglée axialement par le moteur d'entraînement (05).

4. Unité de broche selon la revendication 3,
**caractérisée en ce que**
le dispositif de commutation (16, 22) est conçu du type d'un accouplement commutable (22), en particulier un accouplement magnétique, la commutation de l'accouplement (22) permettant la transmission du mouvement de réglage du moteur d'entraînement (05) optionnellement soit au dispositif de réglage axial (13, 15, 16) soit au mécanisme d'entraînement en rotation de la broche d'entraînement (06).

5. Unité de broche selon l'une quelconque des revendications 1 à 4,
**caractérisée en ce que**
dans le premier mode de fonctionnement la broche d'entraînement (06) est entraînée par le moteur d'entraînement (05) uniquement de manière rotative, et dans le second mode d'entraînement la broche d'entraînement (06) est entraînée par le moteur d'entraînement (05) de manière rotative tout en étant axialement réglée.

6. Unité de broche selon l'une quelconque des revendications 1 à 5,
**caractérisée en ce que**
le dispositif de réglage axial (13, 15, 16) comprend un écrou de broche (15) étant monté de manière à pouvoir tourner dans l'unité de broche (02), un dispositif de verrouillage (16) commutable permettant le verrouillage de l'écrou de broche (15) de manière solidaire en rotation et permettant la déverrouillage de manière à pouvoir tourner, et une broche filetée (13) étant reliée avec la broche d'entraînement (06) et étant en engrènement avec l'écrou de broche (15).

7. Unité de broche selon la revendication 6,
**caractérisée en ce que**
le dispositif de verrouillage (16) commutable comprend au moins une griffe (17) pouvant être réglée par moteur entre une position de verrouillage et une position de déverrouillage, la griffe (17) s'engrenant dans un évidement de l'écrou de broche (15) et verrouillant l'écrou de broche (15) de manière solidaire en rotation dans la position de verrouillage, et la griffe (17) se détachant de l'évidement de l'écrou de broche (15) et l'écrou de broche (15) pouvant tourner librement dans la position de déverrouillage.

8. Unité de broche selon la revendication 6 ou 7,
**caractérisée en ce que**
la broche filetée (13) présente au moins une surface de frottement qui, dans la position d'utilisation et/ou dans la position de repos de la broche d'entraînement (06), vient en contact avec une surface de butée de l'écrou de broche (15) par engagement à frottement afin de permettre la transmission d'un couple par engagement à frottement entre l'écrou de broche (15) et la broche filetée (13).

9. Unité de broche selon l'une quelconque des revendications 6 à 8,
**caractérisée en ce que**
la broche filetée (13) et l'écrou de broche (15) présentent un pas de filet auto-inhibiteur afin de permettre la transmission d'un couple par engagement à frottement entre l'écrou de broche (15) et la broche filetée (13).

10. Unité de broche selon l'une quelconque des revendications 1 à 9,
**caractérisée en ce que**
le moteur d'entraînement (05) est appuyé de manière solidaire en rotation à l'unité de broche (02) pour assurer une connexion étant solidaire en rotation.

11. Unité de broche selon la revendication 10,
**caractérisée en ce qu'**
au moins un fendage s'étendant en parallèle à l'axe longitudinal de la broche d'entraînement (06) pour assurer un montage de manière solidaire en rotation et axialement déplaçable du moteur d'entraînement (05) est prévu dans le boitier du module (11), ledit fendage présentant un support de couple (14) s'étendant à travers celui-ci et étant fixé au moteur d'entraînement (05).

12. Unité de broche selon l'une quelconque des revendications 6 à 9,
**caractérisée en ce que**
la broche filetée (13) et la broche d'entraînement (06) sont reliées entre elles au moyen d'un élément d'accouplement étant rigide en torsion.

13. Unité de broche selon la revendication 12,
**caractérisée en ce que**
l'élément d'accouplement étant rigide en torsion est un élément amortisseur pour l'amortissement de pics de couple.

14. Unité de broche selon l'une quelconque des revendications 6 à 13,
**caractérisée en ce que**
l'axe central du moteur d'entraînement (05), l'axe central de la broche d'entraînement (06) et l'axe central de la broche filetée (13) s'étendent coaxialement et définissent un axe central de l'unité de broche (18).

15. Unité de broche selon l'une quelconque des revendications 1 à 14,
**caractérisée en ce que**
le moteur d'entraînement (05) est conçu du type d'un servomoteur réglable, le servomoteur présentant au moins un capteur, en particulier un capteur de position.

16. Unité de broche selon l'une quelconque des revendications 1 à 15,
**caractérisée en ce que**
l'unité de broche (02) est conçue en tant qu'unité modulaire et comprend un boitier de module (11), la broche d'entraînement (06) étant montée de manière à pouvoir tourner et à être axialement déplaçable, le boîtier de module (11) pouvant être fixé à la tête d'usinage (01) conjointement avec les boîtiers de module (11) d'autres unités de broche (02a, 02b, 02c, 02d).

17. Unité de broche selon la revendication 16,
**caractérisée en ce que**
dans le boitier de module (11) d'une unité modulaire plusieurs, en particulier deux, unités de broche sont prévues, chacune présentant un moteur d'entraînement (05) et une broche d'entraînement associée (06).
